# EUROPEAN PATENT SPECIFICATION

(11) **EP 4 182 404 B1**
(45) Date of publication and mention of the grant of the patent: **22.10.2025**
(21) Application number: 21843353.0
(22) Date of filing: 02.06.2021
(51) Int. Cl.: C09K 17/32, C08L 1/02, B01D 21/26, B01D 21/01

(54) **FIBRILLATED CELLULOSE CONSOLIDATION OF MINERALIZED PARTICULATES**
FIBRILLIERTE CELLULOSEKONSOLIDIERUNG VON MINERALISIERTEN PARTIKELN
CONSOLIDATION DE PARTICULES MINÉRALISÉES PAR DE LA CELLULOSE FIBRILLÉE

(30) Priority: 16.07.2020 US 202063052791 P
(43) Date of publication of application: 24.05.2023
(73) Proprietor: Performance Biofilaments Inc., Vancouver, BC V6C 1G8 (CA)
(72) Inventor: GOURLAY, Keith, Vancouver, British Columbia V6C 1G8 (CA); BEIER, Nicholas, Vancouver, British Columbia V6C 1G8 (CA); MINHAS, Gurminder, Vancouver, British Columbia V6C 1G8 (CA)
(74) Representative: De Clercq & Partners
(86) International application number: PCT/CA2021/050759
(87) International publication number: WO 2022/011449

(56) References cited:
- CA-A1- 3 090 039
- JP-B2- 6 179 470
- RU-C1- 2 285 679
- US-A1- 2019 309 211
- US-B2- 9 200 193
- GUMFEKAR SARANG P., ROONEY THOMAS R., HUTCHINSON ROBIN A., SOARES JOÃO B. P.: "Dewatering Oil Sands Tailings with Degradable Polymer Flocculants", APPLIED MATERIALS & INTERFACES, vol. 9, no. 41, 18 October 2017 (2017-10-18), US , pages 36290 - 36300, XP009534091, ISSN: 1944-8244, DOI: 10.1021/acsami.7b10302
- AFACAN CHRISTOPHER, NARAIN RAVIN, SOARES JOÃO: "Water soluble polymeric nanofibres for rapid flocculation and enhanced dewatering of mature fine tailings", CANADIAN JOURNAL OF CHEMICAL ENGINEERING, vol. 98, no. 1, 1 January 2020 (2020-01-01), US , pages 96 - 103, XP009534089, ISSN: 0008-4034, DOI: 10.1002/cjce.23636

## Description

### FIELD

Innovations are disclosed in the field of cellulose fibre composites, particularly composites that include cellulose nanofibrils acting to consolidate mineralized particulates, such as tailings.

### BACKGROUND

Cellulose is frequently characterized as the most abundant organic polymer on Earth. In the plants from which cellulose fibers are commercially extracted, cellulose generally takes the form of linear β(1,4)D glucose polymers, varying in the degree of polymerization (DP), collectively associated into fibrils of varying dimensions, embedded with hemicellulose and other components in a matrix of lignin. A very wide variety of processes have been described for extracting cellulose fibres from lignocellulosic biomass, yielding an array of cellulose-derived materials, such as microfibrillated cellulose (see CA1141758 and US4374702) and cellulose nanofilaments (see WO2011140643 and WO2012097446).

Nanofibrillated cellulose (NFC) may for example be prepared by applying chemical or mechanical energy to a pulp, such as a kraft pulp or a thermomechanical pulp (TMP), so that larger cellulose fibres are broken down into smaller filaments or fibrils, nano-scale in cross section, in a process involving delamination of the larger fibres. Mechanical grinding processes may for example be used to provide fibrils on this scale that are up to 10s to 100s of micrometres in length. These processes may involve refining of a cellulosic pulp, refining in this context connoting the mechanical treatment of fibrous cellulosic (traditionally paper) pulps suspended in water. Refining processes may be characterized by the consistency of the pulp (the proportion of solids by weight in the pulp, low consistency pulps for example having 3-5% by weight solids), and the intensity of the refining process (the specific energy applied to a unit mass of fiber per refiner bar impact). Processes have been described for the preparation of high aspect ratio cellulose nanofilaments involving the use of high total specific refining energy (the useful energy imparted to the pulp) under conditions of high consistency and low refining intensity (see WO2012097446). The dimensions of the fibrils may in turn confer distinct rheological properties on composite products comprising the fibrils.

The stabilization of unconsolidated particulate materials is required in a wide variety of contexts, including geotechnical engineering, and building construction. Bulk particulate materials may be physically characterized, for example by particle-size or grain-size distribution (PSD or GSD). In the very fine-grained clay-silt particle size range, a hydrometer test may for example be used (see ASTM D7928 (2017)) to analyze materials with a GSD ranging from 0.075 mm to approximately 0.001 mm using a sedimentation method based on Stokes' law (based on the principle that the velocity of the settlement of particles in water depends on grain size, shape, and mass). Particulate materials can present stabilization challenges, particularly if the material includes at least a portion of very fine material.

Particulate materials that require stabilization may be characterized by their chemical, often mineralogical, components. Unconsolidated soils for example often comprise a mixture of clay, sand, and humus. Clays may themselves form a distinct class of particulate materials, typically comprised of finely-grained clay minerals with traces of quartz (SiO₂), metal oxides (Al₂O₃, MgO etc.) and organic matter. Clay minerals are typically phyllosilicates, such as hydrous aluminium phyllosilicates, containing variable amounts of water in the mineral structure, with variable amounts of iron, magnesium, alkali metals, alkaline earths, and other cations. Clays can present stabilization problems due to an inherent degree of plasticity due to particle size and geometry, as well as water content, a problem that may be exacerbated by the characteristics present in clay minerals of ultrafine-grained material (for example less than 2 micrometres in size). One characteristic of clay in particular that can lead to stabilization challenges is the presence of charge on the clay particle surface. Clay particles tend to be negatively charged, which causes the clay particles to repel each other and to attract water. These two factors lead to challenges with consolidating and strengthening clay-containing particulates. Gangue often contains clay minerals, such as kaolinite Al₄(Si₄O₁₀)(OH)₈ and gibbsite Al(OH)₃. In some bitumen tailings, for example, kaolinite and illite are present in a fines fraction, which may make dewatering and consolidation particularly difficult and time-consuming.

There remains a need for methods capable of stabilizing particulate materials, including methods that increase shear strength, particularly materials that include a range of mineralogically distinct components that are present in a range of sizes.

### SUMMARY

Processes are provided for stabilization of particulate materials, including processes that make use of cellulose fibrils that are dimensioned to provide a surprising degree of stabilization for particulates that include particles in a selected size range. In select embodiments, a relatively small volume of nanofibrillated cellulose may accordingly provide fibres of appropriate dimensions to effect a degree of stabilization that is consistent with the entanglement of a substantial proportion of particles in the material, including particles that comprise mineralizations on a micron to millimetre scale. For example, the size ranges of the fibrillated cellulose and the particulate material may be matched, so that at least 50% of the mineralized particles are in a size range that falls within the width range of at least 50% of the fibrillated cellulose fibrils. In this way a substantial portion of the fibrils are of an appropriate length to entangle a substantial proportion of the particles.

The unconsolidated particulate material may for example include a substantial fraction of ultrafine-grained mineral particles, such as clay or silica particles, comprising a weight fraction of 20-100%, or at least 50%, mineralized particles in a size range of from 1 µm to 2mm, or similar fraction below a specific threshold, such as ≤ 2 µm on a standard particle size classification. The unconsolidated particulate material may be initially characterized as having a relatively low shear strength, for example of less than 1 kPa, and/or a significant water content (geotechnical water content: Mass_{water} / Mass_{solids}), for example of from 25wt% to 1000wt%, or from 50wt% to 500wt%. Unconsolidated material of this kind presents a significant stabilization challenge.

To dimension the fibrillated cellulose for stabilization of unconsolidated particulate material of this kind, the fibrillated cellulose may comprise a substantial fraction, such as a weight fraction of at least 75%, cellulose fibrils having a relatively high aspect ratio of length to width (AR_{l:w}), for example an AR_{l:w} of ≥ 20. This fraction of the cellulose fibrils may for example comprise a relatively large proportion of relatively long and thin fibrils, for example having more than 50% cellulose fibrils that have widths of less than 1 µm, or 20 nm to 30 µm, and lengths of more than 10 µm, or 1 µm to about 2,000 µm. The dry fibrillated cellulose may alternatively be characterized by a relatively high water absorbency, such as a water retention value of at least 1.5 grams of water per gram of dry fibrillated cellulose (g_{w}/g_{c}), or at least 2, 3, 4 or 5 g_{w}/g_{c}, or from 2 to 5.5 g_{w}/g_{c}; or 3 to 5.5 g_{w}/g_{c}.

To achieve significant stabilization, the unconsolidated particulate material may be admixed with a relatively small proportion of the fibrillated cellulose, for example of from about 0.025 wt% to 5 wt%, or from 0.05 wt% to 1 wt%, on a dry weight basis (dry mass of cellulose over dry mass of tailings solids). In select embodiments, stabilizations may be carried out so as to achieve a desired degree of material strength, for example shear strengths of over 100kPa, within a desired time period, for example within <365 days, or within <100 days, or within <30 days. This stabilization may be effected over a stabilization time after the admixed material is emplaced at a selected site, and atmospheric or other drying is allowed to occur, with fibrillated cellulose in some cases effecting more rapid drying of the admixed material. The stabilized material at the end of the stabilization time may for example have a stabilized shear strength at least 50% higher than the shear strength of the unconsolidated particulate material. In select embodiments, this degree of stabilization may be achieved even with the presence of a meaningful water content, for example with the stabilized material comprising at least 10, 25, 50, 75, or 100 wt% geotechnical water content Further stabilization may occur as the stabilized material dries over time, so that the stabilization time coincides with a period of drying.

### BRIEF DESCRIPTION OF THE DRAWINGS

**Figure 1** is a scatter plot showing results of hydrometer analyses of FFT samples (2 tests) and centrifuge tailings, as discussed in Example 1.
**Figure 2** is a line graph illustrating the impact of cellulose dilution on 0.5 wt.% cellulose dose, as discussed in Example 1.
**Figure 3** is a line graph illustrating the impact of cellulose dilution on 1.0 wt.% cellulose dose, as discussed in Example 1.
**Figure 4** is a line graph illustrating the impact of cellulose dilution on 7.5 wt.% cellulose dose, as discussed in Example 1.
**Figure 5** is a line graph illustrating the impact of cellulose dose on the shear strength of treated FFT in the substantial absence of drying, as discussed in Example 1.
**Figure 6** is a line graph illustrating the effect of mixing speed on 33 wt.% FFT - 2.5 wt.% cellulose dose sample mixed for <90s, as discussed in Example 1.
**Figure 7** is a line graph illustrating the effect of mixing speed on 33 wt.% FFT - 2.5 wt.% cellulose dose sample mixed for 180s, as discussed in Example 1.
**Figure 8** is a line graph illustrating the effect of mixing time on 33 wt.% FFT - 2.5 wt.% cellulose dose sample mixed at 600 RPM, as discussed in Example 1.
**Figure 9** is a line graph illustrating the effect of mixing time on 33 wt.% FFT - 2.5 wt.% cellulose dose sample mixed at 900 RPM, as discussed in Example 1.
**Figure 10** is a line graph illustrating the effect of mixing time on 53 wt.% FFT- 2.5 wt.% cellulose dose sample mixed at 600 RPM, as discussed in Example 1.
**Figure 11** is a line graph illustrating the effect of mixing time on 53 wt.% FFT- 2.5 wt.% cellulose dose sample mixed at 900 RPM, as discussed in Example 1.
**Figure 12** is a line graph illustrating atmospheric drying of cellulose treated samples, as discussed in Example 1.
**Figure 13** is a line graph illustrating that 0.1 wt% addition of NFC doubled the compressive strength in tailings/backfill, as discussed in Example 3.
**Figure 14** is a photograph illustrating strengthening of a soil sample, as discussed in Example 4.

### DETAILED DESCRIPTION

Process are provided that may be adapted for stabilizing a wide range of particulate materials, such as unconsolidated tailings, ores, gangue materials, soils, earthworks, backfill, iron and steel slags, clinker ash, coal slurries, fly ash, Ileminite clays and mixtures thereof. The exemplified embodiments disclosed herein demonstrate effective stabilization of chemically and physically distinct materials, including tailings and soils. The exemplified tailings are of a particularly intractable class of materials, fluid fine tailings (FFT), a fine-grained slurry waste product of some hydrocarbon recovery operations that is produced in significant volumes generally consisting of a mixture of sand, silts, dispersed clays, and water. Without treatment, FFT may not exhibit appreciable consolidation for decades. The present processes have accordingly demonstrated effective stabilization of materials that may otherwise be very difficult to reclaim or transport, using relatively small amounts of fibrillated cellulose stabilizer. It has been found that the time period for stabilization may vary from one material to another, and that by adjusting that variable similar processes may be made to be effective with a surprisingly wide range of materials. This diversity of applications coincides with a distinct characteristic of the fibrillated cellulose stabilizer, which is made up of fibrils having a relatively high AR_{l:w} aspect ratio, surface area, and water-holding ability, while including fibrils of a relatively wide range of lengths that coincide with the size range of particles to be stabilized.

The size range of the fibrillated cellulose stabilizer facilitates the effective stabilization of unconsolidated particulate materials that, in select embodiments, include a substantial fraction of ultrafine-grained mineral particles, including materials in the clay-silt particle size range. This may for example include distinct mineral particles, such as clay minerals (e.g. kaolinite, gibbsite and illite) or silica particles (quartz). The particulate material may for example comprise a weight fraction of 20-100%, or at least 30, 40, 50, 60, 70, 80 or 90%, mineralized particles in a particular size range, for example of from about 1 µm to about 2mm, or a similar fraction below a specific threshold, such as equal to or less than 2, 3, 4, 5, 6, 7, 8, 9 or 10 µm on a standard particle size classification (such as a mesh size or hydrometer test).

Reflecting the need for stabilization, the unconsolidated particulate material may be initially characterized as having a relatively low shear strength. This may in turn reflect a relatively low bearing capacity and/or unconfined compressive strength. The initial shear strength of the unconsolidated material may for example be less than 0.5, 1, 2, 3, 4, 5, 6, 7, 8, 9, 10, 15, or 20 kPa. The unconsolidated material may also be in some implementations characterized as having a significant water content, for example of from 50wt% to 1000wt% geotechnical water content, or at least 50, 75, 100, 150, 200, 250, 300, 500, or 1000 wt% geotechnical water content. Unconsolidated material of this kind presents a significant stabilization challenge.

The stabilization of the unconsolidated material may be effected over a stabilization time, for example after the admixed material is emplaced at a selected site. The stabilized material at the end of the stabilization time may for example have a stabilized shear strength at least 30, 40, 50, 60, 70 or 80% higher than the shear strength of the unconsolidated particulate material. The stabilized material may alternatively, or in addition, be characterized by a degree of improvement in unconfined compressive strength and/or bearing capacity, such as a 30, 40, 50, 60, 70 or 80% improvement in one or both of those parameters. In select embodiments, this degree of stabilization may be achieved even with the presence of a meaningful water content, for example with the stabilized material comprising at least 10, 25, 50, 75, or 100 wt% geotechnical water content. Further stabilization may occur as the stabilized material dries over time, so that the stabilization time coincides with a period of drying. The stabilized material may accordingly contain a reduced weight fraction of water, for example reduced by 10, 20, 30, 40, 50, 60, 70 or 80%.

To dimension the fibrillated cellulose for stabilization of unconsolidated particulate material, the fibrillated cellulose may comprise a substantial fraction, such as a weight fraction of at least 50, 60, 70, 75, 80 or 85%, cellulose fibrils having a relatively high aspect ratio of length to width (AR_{l:w}), for example an AR_{l:w} of ≥ 20, 30, 40, 50, 60, 70, 80, 90 or 100, or between about 20 and 500. This fraction of the cellulose fibrils may for example comprise a relatively large proportion of relatively long and thin fibrils, for example having more than 40, 50, 60 or 70% cellulose fibrils that have widths of less than 1, 2, 3, 4, 5, 6, 7, 8, 9, or 10 µm, or within a range, such as 20 nm to 30 µm, and lengths of more than 5, 10 or 15 µm, or lengths in a range, such as from 1 µm up to about 2,000 µm. The fibrillated cellulose may alternatively be characterized by a relatively high water absorbency, such as a water retention value of at least 1.5 grams of water per gram of dry fibrillated cellulose (g_{w}/g_{c}), or at least 2, 3, 4 or 5 g_{w}/g_{c}, or from 2 to 5.5 g_{w}/g_{c}; or 3 to 5.5 g_{w}/g_{c}. The surface area of the fibrillated cellulose is another parameter amenable to control, and may for example be at least about 50, 60, 70, 80, 90 or 100 m²/g. The specific gravity of the fibrillated cellulose when dry may in some embodiments be between about 1.3 and about 1.5. In addition, or alternatively, the viscosity of the fibrillated cellulose, as described below, may be such that a suspension comprising 1% w/w nanofilaments in water at 25°C under a shear rate of 100 s⁻¹ has a viscosity greater than 0.1 Pa·s (100 cps) or greater than 0.08, 0.09, 0.11 or 0.12 Pa·s (80, 90, 110 or 120 cps).

Fibrillated celluloses having the required characteristics may be prepared by a variety of process, such as processes described in WO2011140643 and WO2012097446. As described therein, the cellulosic nanofilaments may have a length of at least 100 µm, and a width of about 30 to about 300 nm, wherein the nanofilaments are physically detached from each other, wherein a suspension comprising 1% w/w nanofilaments in water at 25°C under a shear rate of 100 s⁻¹ has a viscosity greater than 100 cps. Processes described for producing such cellulosic filaments involve providing a pulp comprising cellulosic fibers having an original length of at least 100 µm; and feeding the pulp to at least one nanofilamentation step comprising peeling the cellulosic filaments of the pulp by exposing the filaments to a peeling agitator with a blade having an average linear speed of at least 1000 m/min to 2100 m/min, wherein the blade peels the cellulosic fibers apart while substantially maintaining the original length to produce the nanofilaments.

To achieve significant stabilization, the unconsolidated particulate material may be admixed with a relatively small proportion of the fibrillated cellulose, for example of from about 0.025 wt% to 5 wt% on a dry weight basis, or an amount that is less than about 1, 2, 3, 4, 5, 6, 7, 8, 9 or 10 wt% on a dry weight basis. In select embodiments, stabilizations may be carried out so as to achieve a desired degree of material strength, for example shear strengths of over 50, 60, 70, 80, 90, 100, 110, 120, 130, 140 or 150kPa. The process may be adapted so that this degree of stabilization is achieved within a desired time period, for example within 10, 25, 50, 100 or 365 days. Unconsolidated particulate materials treated with fibrillated cellulose may for example achieve desired minimum shear strengths more rapidly than untreated materials, for example at least 10, 25, 50, or 75% faster than untreated materials. Alternatively, the stabilization time may be less than 1, 2, 3, 6, 9 or 12 months, or less than 1, 6, 12 or 24 hours. In some embodiments, for example with soils and with low moisture content, the stabilization effect has been observed to be essentially immediate. This may similarly be the case with materials, such as tailings, with high solids content, e.g. centrifuged tailings. In contrast, for materials with relatively low solids content, such as FFT, the stabilization time was 7-14 days and occurred in parallel with drying of the material (in the Example described herein).

In select embodiments, the fibrillated cellulose may be admixed with an unconsolidated particulate material so as to speed a process of drying the admixed material, for example so that it dries more quickly than an equivalent unconsolidated particulate material that is not similarly admixed with fibrillated cellulose.

The fibrillated cellulose may optionally be pre-dispersed in an aqueous medium prior to admixing the fibrillated cellulose with the unconsolidated particulate material. The pre-dispersed fibrillated cellulose may in some cases be stored, and storage containers may accordingly bear instructions for use of the fibrillated cellulose in accordance with the methods disclosed herein.

The fibrillated cellulose may for example be produced from a thermomechanical pulp (TMP), for example to produce a TMP-NFC. Alternatively, the fibrillated cellulose may be produced from a bleached hardwood kraft pulp, a bleached softwood kraft pulp, a chemical pulp, a mechanical pulp, a sulfite pulp. The pulp may for example be produced from a hardwood, a softwood, or an annual fibre lignocellulosic material. In select embodiments, chemical-free (mechanical) refining processes may be used to provide cellulose fibrils of exceptional strength and purity, with very high aspect ratios and surface areas. The chemical-free processes for producing fibrillated cellulose may for example use as a starting material standard wood pulps, including wood pulps that have previously been subjected to a chemical process step at some point. The chemical-free methods for converting pulp fibers or other biomass into nanocellulose are accordingly mechanical refining processes, as distinct from other methods that use strong acids or oxidizing agents to promote the fibrillation/extraction of nanocellulose.

Unless context dictates otherwise, "cellulose fibril" as used herein refers to a bulk fibrillated cellulose material, and "fibrillated cellulose" refers to a cellulose fiber that has been refined or fibrillated, for example using methods discussed herein. In some embodiments, cellulose fibrils comprise nanofibrillated cellulose and/or microfibrillated cellulose.

### EXAMPLES

### Example 1: Tailings

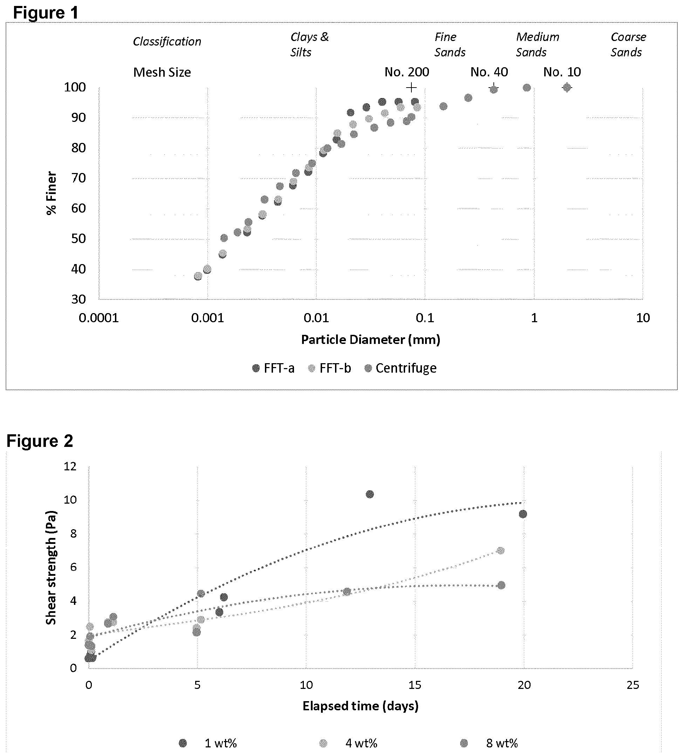

This example relates to the treatment of a fine-grained slurry waste produced by oil sands operations, known as fluid fine tailings (FFT). The treated FFT has poor consolidation and settling properties, a solids content of ~35% by mass and consists of a mix of sand, silts, dispersed clays, and water. Bulk X-Ray diffraction (XRD) analysis showed that the FFT samples consisted mostly of kaolinite (58 wt.%), quartz (24 wt.%), and illite (9 wt.%), with small amounts of other clays and silts. Results of a duplicated hydrometer test on an FFT sample as compared to that of centrifuged tailings can be seen in **Figure 1****,** illustrating that the FFT have slightly finer material than the centrifuge cake.

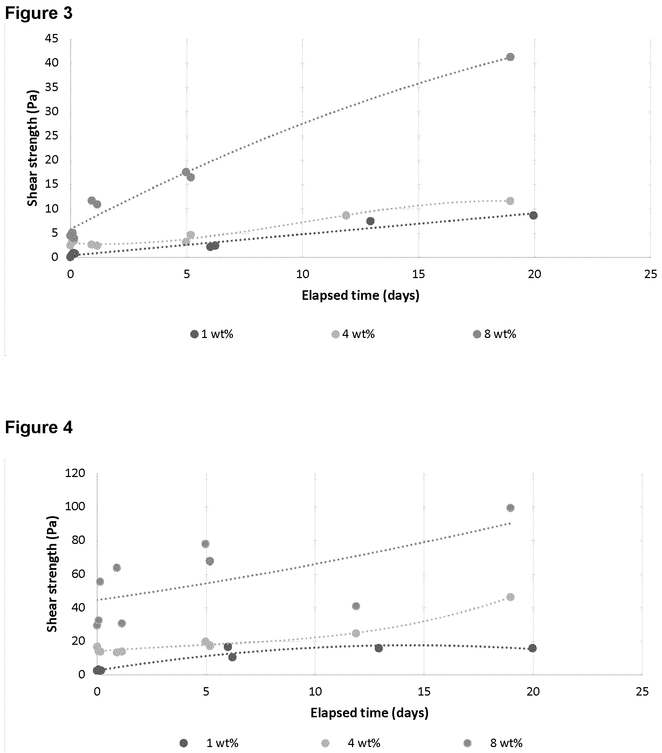

Three cellulose:water dilutions were exemplified to illustrate the optimization of mixing and strength characteristics for the cellulose treated tailings. The dilutions were 1 wt.%, 4 wt.%, and 8 wt.%. When diluting the cellulose, the calculated amount of distilled water was added to the cellulose and mixed for one hour at 200 RPM with a 4-blade impeller. The mixtures were then sealed and allowed to rest for 24 hours. The dilutions were then used at three cellulose:FFT doses of 0.5 wt.%, 1.0 wt.%, and 7.5 wt.% as seen in **Figure 2****,** **Figure 3,** and **Figure 4****,** respectively. The initial solids content of the FFT was 33 wt.%, and all ratios are based on dry mass of solids.

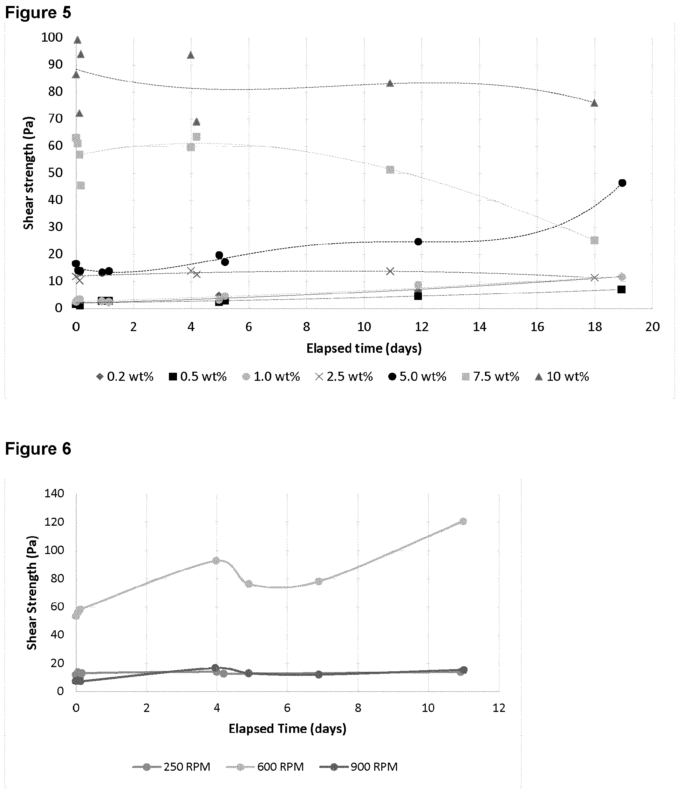

A cellulose:water dilution of 4 wt.% was used for illustration of dosage effects. The cellulose:FFT dose was varied from 0.2 wt.% to 10 wt.% and resulting shear strength was assessed. The seven doses exemplified are as follows: 0.2, 0.5, 1.0, 2.5, 5.0, 7.5, and 10 wt.%; based on dry mass. The samples were treated in a closed system with no drying. The shear strength values tested over 19 days can be seen in **Figure 5****.**

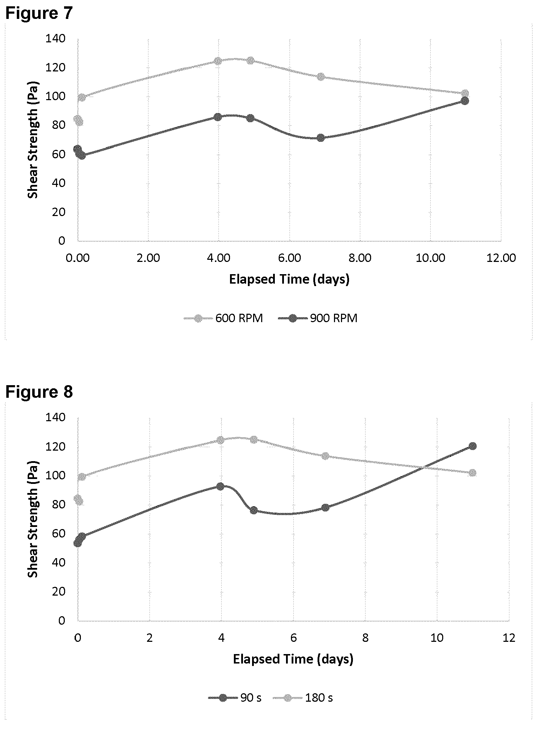

Alternative parameters for agitation of the cellulose:FFT mixture were exemplified, including speed and duration of mixing. Mixing speeds of 250 RPM, 600 RPM and 900 RPM are illustrated for a 33 wt.% solids FFT. Results from the cellulose:FFT dose of 2.5 wt.% for < 90 seconds and 180 seconds are shown in **Figure 6** and **Figure 7****,** respectively.

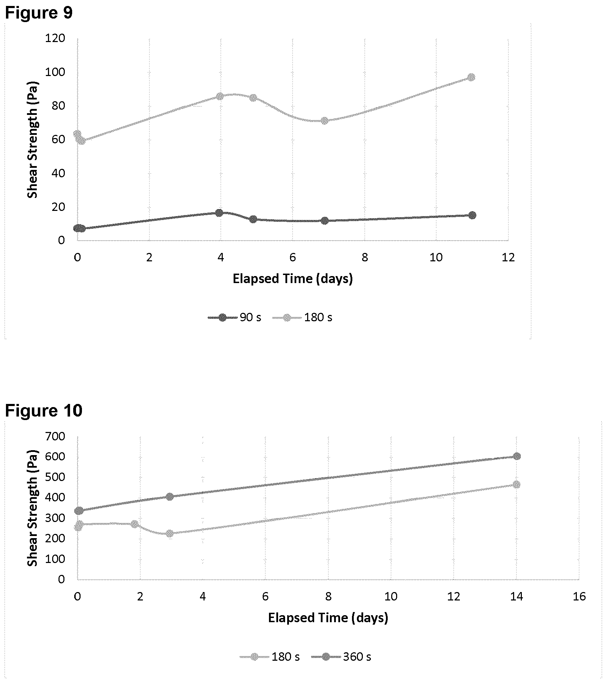

In addition, the effect of speed was tested by comparing two mixing times (90 and 180 seconds) while also varying the mixing rates. Results for mixing for 600 RPM and 900 RPM are seen in **Figure 8** and **Figure 9****,** respectively.

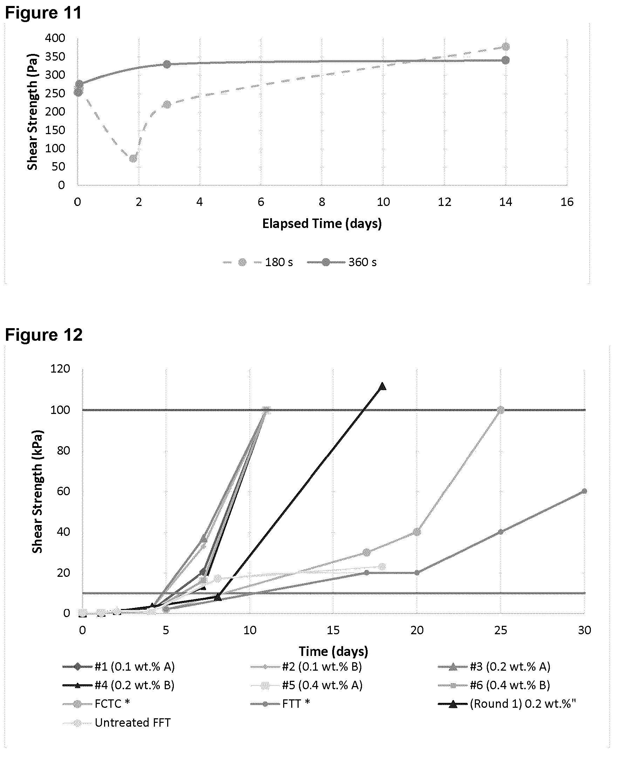

Mixing parameter illustrations were also undertaken for higher solids content FFT of 53 wt.%. All samples were mixed with a cellulose:water dilution of 4 wt.% at a cellulose:FFT dose of 2.5 wt.%. Achieving full dispersion with the higher solids content FFT was more difficult at 90 seconds, so the mixing times were increased to 180 and 360 seconds. Two mixings speeds were illustrated: 600 RPM and 900 RPM. Similar to the lower solids content FFT, the 53 wt.% FFT samples achieve higher strengths at 600 RPM rather than 900 RPM. The results show how the variation of mixing times affect the shear strengths, as shown in **Figure 10** and **Figure 11** for 600 RPM and 900 RPM, respectively.

Quantitative testing was carried out on six tailings samples, as characterized in **Table 1.**

**Table 1: Quantitative Test Samples**

| Sample | Description |
|---|---|
| 1 | 0.05 wt.% cellulose:FFT ratio (FFT began at 54 wt.% solids) |
| 2 | 0.2 wt.% cellulose:FFT ratio (FFT began at 54 wt.% solids) |
| 3 | 2.5 wt.% cellulose:FFT ratio (FFT began at 54 wt.% solids) |
| 4 | 850 g A3338 polymer to 1 tonne FFT then dosed at 2.5 wt.% cellulose:mixture (FFT began at 54 wt.% solids) |
| 5 | 2.5 wt.% cellulose:centrifuge tailings (began at 55 wt.% solids) |
| 6 | Untreated FFT (began at 54 wt.% solids) |

Atmospheric drying tests and near-surface shear strength tests were conducted to illustrate the effect of drying on the undrained shear strength properties of cellulose-treated tailings. The evaporation test was carried out using 7 identical containers (15 cm dia. x 13 cm height). One container contained water to measure the potential evaporation (PE) rate and the other 6 containers with tailings samples were used to measure the actual evaporation (AE) rate. The mass of each container was periodically monitored to determine the rate of evaporation. The shear strength of each sample was measured at a depth of around 3 cm using either a rheometer (low strengths, <40 kPa) or a vane-shear apparatus (higher strengths, >40 kPa). The temperature and relative humidity (RH) of the air above the evaporating surfaces were measured daily to account for any temperature anomalies.

Cellulose-treated samples are shown in **Figure 12****,** as compared to two untreated tailings samples: FCTC (flocculated and centrifuged tailings cake, 55.40 wt.% solids) and FTT (flocculated and thickened tailings, 46.4 wt.% solids). **Figure 12** also compares the 0.2 wt.% and untreated samples tested in atmospheric drying assays. These results illustrate that addition of <0.1 wt% NFC was found to dramatically increase shear strength, and this achieved >100kPa trafficable target peak strength in <11 days.

### Example 2: Backfill

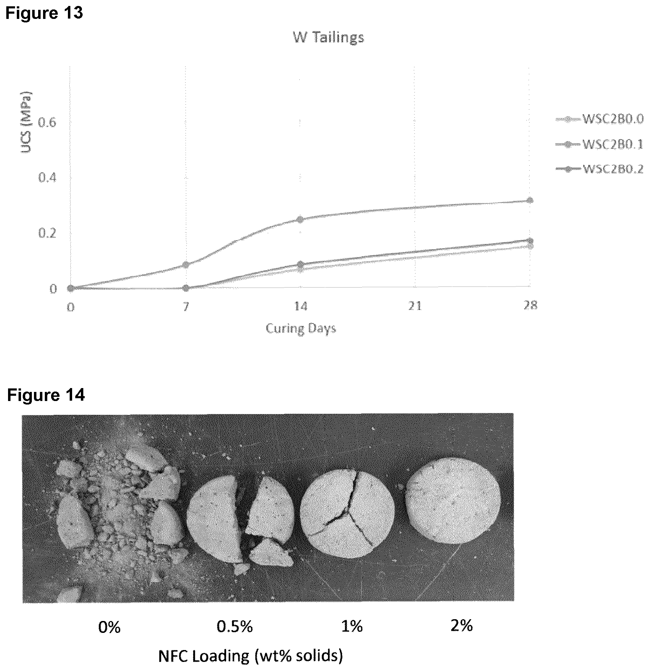

In this example, NFC was added to two sources of paste backfill, and shown to significantly improve compressive strength over a cure time of days, as illustrated in **Figure 13****.** These results illustrate that 0.1 wt% addition of NFC doubled the compressive strength in tailings/backfill containing 2% cement. Interestingly, increasing the NFC loading to 0.2 wt% reduced this effect, indicating that the present processes may be optimized for use of low NFC doses.

### Example 3: Soil Mechanics

This example relates to the addition of NFC to earth/soil/sand, in a pilot trial in which the addition was shown to dramatically alter wet flow properties and dry soil mechanics. This soil conditioning with NFC provides for embodiments that relate to erosion and sediment control, dust suppression and strengthening of earthworks. As illustrated in **Figure 14****,** relatively low loadings of NFC (<0.5 wt%) were found to promote gelling of wet soil and to provide for the formation of a cohesive solid when dried. Processes may accordingly be adapted to provide for improved durability of earthworks, with reduced erosion and controlled sediment release.

### REFERENCES

CA2437616
EP2014828
NZ507723
US20020028222
US20030134120
US20040009141
US20080296808
US20090324680
US20100018641
US20100065236
US20110277947A1.
US3427690
US4036679
US4120747
US4374702
US4455237
US4811908
US5269470
US5385640
US6183596
US6420013
US6514384
US6818101
US6835311
US7297228
US7455901
US7566014
US7655112
US8282773
US8444808
US8734611
US9856607
WO1999016960
WO2007091942
Terms such as "exemplary" or "exemplified" are used herein to mean "serving as an example, instance, or illustration." Any implementation described herein as "exemplary" or "exemplified" is accordingly not to be construed as necessarily preferred or advantageous over other implementations, all such implementations being independent embodiments. Unless otherwise stated, numeric ranges are inclusive of the numbers defining the range, and numbers are necessarily approximations to the given decimal. The word "comprising" is used herein as an open-ended term, substantially equivalent to the phrase "including, but not limited to", and the word "comprises" has a corresponding meaning. As used herein, the singular forms "a", "an" and "the" include plural referents unless the context clearly dictates otherwise. Thus, for example, reference to "a thing" includes more than one such thing. The invention includes all embodiments and variations substantially as hereinbefore described and with reference to the examples and drawings.

## Claims

1. A process for stabilization of particulate materials, comprising:
providing an unconsolidated particulate material comprising a weight fraction of at least 50% mineralized particles in a size range of from <1 µm to 2mm, the unconsolidated particulate material having a shear strength of less than 1 kPa, and a geotechnical water content of from 10wt% to 1000wt%;
admixing the unconsolidated particulate material with from about 0.025 wt% to 1 wt% on a dry weight basis of a fibrillated cellulose to provide an admixed material, the fibrillated cellulose comprising a weight fraction of at least 75% cellulose fibrils having an aspect ratio of length to width of ≥ 20 in a fibrillated cellulose fibrils fraction, the fibrillated cellulose fibrils fraction comprising more than 50% cellulose fibrils that have widths of less than 1 µm and lengths of more than 10 µm; and,
emplacing the admixed material at a site to provide a stabilized material over a stabilization time, wherein the stabilized material at a stabilization time endpoint has a stabilized shear strength at least 50% higher than the shear strength of the unconsolidated particulate material.

2. The process of claim 1, wherein at least 50% of the mineralized particles are in a size range that falls within a width range of at least 50% of the cellulose fibrils of the fibrillated cellulose fibrils fraction.

3. The process of claim 1 or 2, wherein the stabilization time is less than 1 year, less than 1 month, or less than 1 hour.

4. The process of any one of claims 1 to 3, further comprising pre-dispersing the fibrillated cellulose in an aqueous medium prior to admixing the fibrillated cellulose with the unconsolidated particulate material.

5. The process of any one of claims 1 to 4, wherein the fibrillated cellulose when dry has a water retention value of at least 1.5 grams of water per gram of dry fibrillated cellulose, or at least 2, 3, 4 or 5 grams of water per gram of dry fibrillated cellulose, or from 2 to 5.5; or 3 to 5.5 grams of water per gram of dry fibrillated cellulose.

6. The process of any one of claims 1 to 5, wherein the stabilized material comprises at least 10 wt% geotechnical water content, or from 10 to 1000 wt% geotechnical water content.

7. The process of any one of claims 1 to 6, wherein the fibrillated cellulose has a surface area that is at least about 80 m²/g, or from about 50 to 100 m²/g.

8. The process of any one of claims 1 to 7, wherein the fibrillated cellulose has a specific gravity when dry of between about 1.3 and about 1.5.

9. The process of any one of claims 1 to 8, wherein the mineral particles comprise at least a portion of clay and/or silicate particles.

10. The process of any one of claims 1 to 9, wherein the fibrillated cellulose is produced from a pulp that is a thermomechanical pulp (TMP) to produce a TMP-NFC.

11. The process of any one of claims 1 to 9, wherein the fibrillated cellulose is produced from a pulp that is a bleached hardwood kraft pulp, a bleached softwood kraft pulp, a chemical pulp, a mechanical pulp, or a sulfite pulp.

12. The process of claim 10 or 11, wherein the pulp is produced from a hardwood, a softwood, or an annual fibre lignocellulose material.

13. The process of any one of claims 1 to 12, wherein the admixed material dries more rapidly than unconsolidated particulate material that is not admixed with fibrillated cellulose.

## Patentansprüche

1. Verfahren zur Stabilisierung von partikulären Materialien, umfassend:
Bereitstellen eines unverfestigten partikulären Materials, das eine Gewichtsfraktion von mindestens 50 % mineralisierte Partikel in einem Größenbereich von <1 µm bis 2 mm umfasst, wobei das unverfestigte partikuläre Material eine Scherfestigkeit von kleiner als 1 kPa und einen geotechnischen Wassergehalt von 10 Gew.-% bis 1000 Gew.-% aufweist;
Mischen des unverfestigten partikulären Materials mit etwa 0,025 Gew.-% bis 1 Gew.-% einer fibrillierten Cellulose auf Trockengewichtsbasis, um ein gemischtes Material bereitzustellen, wobei die fibrillierte Cellulose eine Gewichtsfraktion von mindestens 75 % Cellulosefibrillen mit einem Seitenverhältnis von Länge zu Breite von ≥ 20 in einer fibrillierten Cellulosefibrillenfraktion umfasst, wobei die fibrillierte Cellulosefibrillenfraktion mehr als 50 % Cellulosefibrillen umfasst, die Breiten von weniger als 1 µm und Längen von mehr als 10 µm aufweisen; und
Einlegen des gemischten Materials an einem Ort, um ein stabilisiertes Material über eine Stabilisierungszeit bereitzustellen, wobei das stabilisierte Material an einem Endpunkt der Stabilisierungszeit eine stabilisierte Scherfestigkeit aufweist, die mindestens 50 % höher ist als die Scherfestigkeit des unverfestigten partikulären Materials.

2. Verfahren nach Anspruch 1, wobei mindestens 50 % der mineralisierten Partikel in einem Größenbereich liegen, der in einen Breitenbereich von mindestens 50 % der Cellulosefibrillen der fibrillierten Cellulosefibrillenfraktion fällt.

3. Verfahren nach Anspruch 1 oder 2, wobei die Stabilisierungszeit kleiner als 1 Jahr, kleiner als 1 Monat oder kleiner als 1 Stunde ist.

4. Verfahren nach einem der Ansprüche 1 bis 3, ferner umfassend: Vordispergieren der fibrillierten Cellulose in einem wässrigen Medium vor dem Mischen der fibrillierten Cellulose mit dem unverfestigten partikulären Material.

5. Verfahren nach einem der Ansprüche 1 bis 4, wobei die fibrillierte Cellulose im trockenen Zustand einen Wasserretentionswert von mindestens 1,5 Gramm Wasser pro Gramm trockene fibrillierte Cellulose, oder mindestens 2, 3, 4 oder 5 Gramm Wasser pro Gramm trockene fibrillierte Cellulose, oder von 2 bis 5,5; oder 3 bis 5,5 Gramm Wasser pro Gramm trockene fibrillierte Cellulose aufweist.

6. Verfahren nach einem der Ansprüche 1 bis 5, wobei das stabilisierte Material einen geotechnischen Wassergehalt von mindestens 10 Gew.-% oder einen geotechnischen Wassergehalt von 10 bis 1000 Gew.-% aufweist.

7. Verfahren nach einem der Ansprüche 1 bis 6, wobei die fibrillierte Cellulose eine Oberfläche aufweist, die mindestens etwa 80 m²/g oder etwa 50 bis 100 m²/g beträgt.

8. Verfahren nach einem der Ansprüche 1 bis 7, wobei die fibrillierte Cellulose im trockenen Zustand eine Wichte zwischen etwa 1,3 und etwa 1,5 aufweist.

9. Verfahren nach einem der Ansprüche 1 bis 8, wobei die Mineralpartikel mindestens einen Teil Tonpartikel und/oder Silikatpartikel umfassen.

10. Verfahren nach einem der Ansprüche 1 bis 9, wobei die fibrillierte Cellulose aus einem Faserstoff hergestellt wird, bei dem es sich um einen thermomechanischen Holzstoff (TMP) handelt, um eine TMP-NFC herzustellen.

11. Verfahren nach einem der Ansprüche 1 bis 9, wobei die fibrillierte Cellulose aus einem Faserstoff hergestellt wird, bei dem es sich einen gebleichten Laubholz-Kraftzellstoff, einen gebleichten Nadelholz-Kraftzellstoff, einen chemisch aufgeschlossenen Zellstoff, einen mechanisch aufgeschlossenen Holzstoff oder einen Sulfitzellstoff handelt.

12. Verfahren nach Anspruch 10 oder 11, wobei der Faserstoff aus einem Laubholz, einem Nadelholz oder einem Einjahresfaser-Lignocellulosematerial hergestellt wird.

13. Verfahren nach einem der Ansprüche 1 bis 12, wobei das gemischte Material schneller trocknet als ein unverfestigtes partikuläres Material, das nicht mit fibrillierter Cellulose gemischt wird.

## Revendications

1. Procédé de stabilisation de matériaux particulaires, comprenant :
l'obtention d'un matériau particulaire non consolidé comprenant une fraction pondérale **d'au** moins 50 % de particules minéralisées dans une plage de tailles allant de < 1 µm à 2 **mm,** le matériau particulaire non consolidé ayant une résistance au cisaillement de moins de 1 kPa, et une teneur en eau géotechnique allant de 10 % en poids à 1000 % en poids ;
le mélange du matériau particulaire non consolidé avec environ 0,025 % en poids à 1 % en poids sur une base sèche d'une cellulose fibrillée pour obtenir un matériau mélangé, la cellulose fibrillée comprenant une fraction pondérale d'au moins 75 % de fibrilles de cellulose ayant un rapport de forme longueur/largeur ≥ 20 dans une fraction de fibrilles de cellulose fibrillée, la fraction de fibrilles de cellulose fibrillée comprenant plus de 50 % de fibrilles de cellulose qui ont des largeurs de moins de 1 µm et des longueurs de plus de 10 µm ; et
la mise en place du matériau mélangé au niveau d'un site pour obtenir un matériau stabilisé sur un temps de stabilisation, le matériau stabilisé à la fin du temps de stabilisation présentant une résistance au cisaillement stabilisée supérieure d'au moins 50 % à la résistance au cisaillement du matériau particulaire non consolidé.

2. Procédé de la revendication 1, dans lequel au moins 50 % des particules minéralisées se situent dans une plage de tailles qui se trouve dans une plage de largeurs d'au moins 50 % des fibrilles de cellulose de la fraction de fibrilles de cellulose fibrillée.

3. Procédé de la revendication 1 ou 2, dans lequel le temps de stabilisation est inférieur à 1 an, inférieur à 1 mois, ou inférieur à 1 heure.

4. Procédé de l'une quelconque des revendications 1 à 3, comprenant en outre la prédispersion de la cellulose fibrillée dans un milieu aqueux avant le mélange de la cellulose fibrillée avec le matériau particulaire non consolidé.

5. Procédé de l'une quelconque des revendications 1 à 4, dans lequel la cellulose fibrillée à l'état sec a une valeur de rétention d'eau d'au moins 1,5 gramme d'eau par gramme de cellulose fibrillée sèche, ou d'au moins 2, 3, 4 ou 5 grammes d'eau par gramme de cellulose fibrillée sèche, ou de 2 à 5,5, ou de 3 à 5,5 grammes d'eau par gramme de cellulose fibrillée sèche.

6. Procédé de l'une quelconque des revendications 1 à 5, dans lequel le matériau stabilisé présente une teneur en eau géotechnique d'au moins 10 % en poids, ou une teneur en eau géotechnique de 10 à 1000 % en poids.

7. Procédé de l'une quelconque des revendications 1 à 6, dans lequel la cellulose fibrillée possède une surface spécifique qui est d'au moins 80 m²/g environ, ou de 50 à 100 m²/g environ.

8. Procédé de l'une quelconque des revendications 1 à 7, dans lequel la cellulose fibrillée possède une densité relative à l'état sec comprise entre environ 1,3 et environ 1,5.

9. Procédé de l'une quelconque des revendications 1 à 8, dans lequel les particules minérales comprennent au moins une partie de particules d'argile et/ou de silicate.

10. Procédé de l'une quelconque des revendications 1 à 9, dans lequel la cellulose fibrillée est produite à partir d'une pâte qui est une pâte thermomécanique (TMP) pour produire une TMP-NFC.

11. Procédé de l'une quelconque des revendications 1 à 9, dans lequel la cellulose fibrillée est produite à partir d'une pâte qui est une pâte kraft blanchie de feuillus, une pâte kraft blanchie de résineux, une pâte chimique, une pâte mécanique, ou une pâte au sulfite.

12. Procédé de la revendication 10 ou 11, dans lequel la pâte est produite à partir d'un matériau lignocellulosique fibreux de feuillus, de résineux ou annuel.

13. Procédé de l'une quelconque des revendications 1 à 12, dans lequel le matériau mélangé sèche plus rapidement que le matériau particulaire non consolidé qui n'est pas mélangé avec de la cellulose fibrillée.
